# EUROPEAN PATENT APPLICATION

(11) **EP 3 754 479 A1**
(43) Date of publication of application: **23.12.2020**
(21) Application number: 20181116.3
(22) Date of filing: 19.06.2020
(51) Int. Cl.: G06F 3/0488, H04N 21/4788, G06F 3/01, G06F 40/169, G11B 27/031, H04N 7/15, H04M 1/725

(54) **SYSTEM AND METHOD FOR COMMUNICATING AMONG CLIENTS**

(30) Priority: 19.06.2019 US 201916445357
(71) Applicant: Metatellus OÜ, 10134 Tallinn (EE)
(72) Inventor: Korhonen, Juha Olavi, 10134 Tallinn (EE)
(74) Representative: Kurig, Thomas

(57) **Abstract**

A communication system for exchanging video images with annotations is set out. The annotations may be time sensitive so as to fade after a preselected amount of time and not clutter up the screen on which the video images are being displayed. The annotations may be drawable entities made by gestures which, after being made, are read, decoded and stored for potential future reference.

## Description

### Field

The present disclosure relates to a system and method for communicating augmented images among clients subscribing to a common live stream.

### Background

Modern video communication enables exchange of images and audio-based information among a plurality of users. Oftentimes a user may wish to augment a particular image being transmitted to or received from another user. Certain tools exist in the art to enable augmenting images, still and/or video, that are communicated among users. The augmentations may be used socially, such as humorously marking up a photographic image with lines and other demarcations so as to comically distort the represented image. Alternatively, the augmentations may also be used in the course of business and/or for emergency purposes, such as when a first user provides a second user with graphical instruction on where, within a particular image, to direct attention. Business examples may include call center support directing a technician in the field to engage specific actions such as entering particular information in particular fields on a device being serviced by the technician. Emergency examples may include directing first responders in a crisis situation to persons in need or to escape routes from dangerous environments.

Problems with current video image augmentation processes include screens becoming cluttered with numerous augmentations that detract the viewer's attention as well as possibly cover up important portions of the video image itself. This problem is especially susceptible when a number of users are simultaneously communicating with one another. Technical problems may also arise, including device requirements for supporting particular software, functionalities and installations. Still further problems may include communication latencies.

Some solutions have been proposed in the art. For example, US9307293B2 sets out a system for sharing annotated videos, the annotation being displayed on top of the corresponding portion of the real-time video stream. US9654727B2 sets out techniques for overcoming communication lag between interactive operations among devices in a streaming session. US9113033B2 sets out a system wherein live video can be shared and collaboratively annotated by local and remote users. US9686497B1 sets out systems and methods for the management of video calls wherein the video call can be annotated. Additional solutions may be found in the article Open Source Based Online Map Sharing to Support Real-Time Collaboration, published in OSGeo Journal Volume 10, which sets out a study on using the Open Source Geographical Information System and mapping solutions to design and develop real-time group map sharing applications. A WebRTC-Based Video Conferencing System with Screen Sharing published in the 2016 2nd IEEE International Conference on Computer and Communications (ICCC) discusses communication and collaboration among different devices, including enhanced screen sharing features based on the WebRTC technology under the Browser/Server framework. Finally, certain commercially available products provide some form of screen sharing and annotations, including those provided by Zoom Video Communications, Inc. and Dropshare.

While the aforementioned are concerned with some form of and functionality for sharing annotated video images, they do not address certain problems, including screen clutter arising from a plurality of relatively simultaneous real-time image annotation by a plurality of users communicating over a live feed. Additionally, the aforementioned solutions include complex device requirements and operational methodologies which do not always result in a relatively real time and effective user experience. Accordingly, these problems may hold back the potential application of screen annotation per se as well as the usability and user enjoyment of such functionalities.

### Summary

Accordingly, embodiments of the present disclosure are directed towards a system and method for augmenting video images exchanged during a video communication. The communication may comprise at least two users operating clients in communication with one another. A client may be an application or web browser running a web based application on an appropriately configured electronic device having a processor, arranged to execute instructions stored into a memory, a communication module for effecting remote communication, a user interface for receiving and decoding user inputs and a display for displaying images and other information to the user as well as receive touch inputs for the user interface. Such devices may be mobile, including stand-alone computers, mobile telephones, tablets and the like as envisioned by the skilled person. Still further embodiments of the present disclosure are directed to a method for communicating augmented images that may operate on the aforementioned.

The communication is arranged to be synchronous thereby obviating problems arising from the typical one-way exchange of information generally found within the prior art. In particular, by way of a user interface thread, a publishing client detects a user input, modifies its state, and notifies the subscribing client of the modification thereby prompting the subscribing client to also modify its own state accordingly. The client may also be configured to display a video feed dictated by the state. Additionally, the client may issue user interface commands to: change the active feed being displayed, notify the other clients of the state change thereby prompting them to modify their own state accordingly as well as display the video feed set as active. As such, from the perspective of the other clients, its own state and collection of drawable entities is modified by the new commands issued by the client to include (if not already present) drawable entities related to the user input. As such, its local state is based on that input with the modification including points, lines, source of video feed and the like.

Accordingly, the above communication may be referred to as a series of exchanged symbols. For example, a first client may, per its user interface, gesture or tap the screen. The gesture would be understood to mean that the client wishes to create a point on the image currently being displayed on the screen. The point would then be stored or added to the first client's collection of drawable entities. At a second client communicating with the first client, the point is added to the second client's collection of drawable entities.

Each client may make use of a rendering process which would run separately in and on the client. A view manager may be arranged to query the state for drawable entities and causes them to be drawn onto a transparent draw layer overlaying a video layer or to be removed if their intended lifetime has expired. The rendering process is to be run repeatedly after a short interval, in order to create animations and/or annotations and the like on top of the video feed as well as keep the resulting appearance relevant.

An embodiment of the present disclosure is directed to a computer-implemented process for communicating among a plurality of clients subscribing to common live feeds, each of the feeds comprising video channel and data track, and each of the clients comprising a video layer for displaying the video channel, a draw layer for displaying a drawable entity and a user interface layer for detecting an inputted gesture and storing it as a drawable entity, the process comprising: detecting the inputted gesture on the user interface layer; storing the gesture as a drawable entity; displaying the drawable entity on the draw layer for a predetermined time; transmitting the drawable entity through the data track; and displaying the drawable entity on the draw layer of the at least one second client of the plurality of clients.

Another embodiment of the present disclosure is directed to a computer-implemented process for communicating among a first and a second client over a feed, the feed including a video channel for and data track, and each of the clients comprising a video layer for displaying the video channel, a draw layer for displaying a drawable entity and a user interface layer for detecting an inputted gesture and storing it as a drawable entity, the process comprising: detecting a gesture on the first user interface layer at the first client; creating a drawable entity from the gesture at the first client; sending the drawable entity from the first client to the second client and storing the drawable entity at the first client; displaying the drawable entity at the first client for a predetermined time; receiving the drawable entity at the second client; and displaying the drawable entity at the second client for the predetermined time.

Yet another embodiment of the present disclosure is a system for communicating among a plurality of clients subscribing to common live feeds, each of the feeds comprising video channel and data track, and each of the clients comprising a video layer for displaying the video channel, a draw layer for displaying a drawable entity and a user interface layer for detecting an inputted gesture and storing it as a drawable entity, the process comprising: means for detecting the inputted gesture on the user interface layer; means for storing the gesture as a drawable entity; means for displaying the drawable entity on the draw layer for a predetermined time; means for transmitting the drawable entity through the data track; and means for displaying the drawable entity on the draw layer of the at least one second client of the plurality of clients.

Still another embodiment of the present disclosure is directed to a system for communicating among a first and a second client over a feed, the feed including a video channel for and data track, and each of the clients comprising a video layer for displaying the video channel, a draw layer for displaying a drawable entity and a user interface layer for detecting an inputted gesture and storing it as a drawable entity, the process comprising: means for detecting a gesture on the first user interface layer at the first client; means for creating a drawable entity from the gesture at the first client; means for sending the drawable entity from the first client to the second client and storing the drawable entity at the first client; means for displaying the drawable entity at the first client for a predetermined time; means for receiving the drawable entity at the second client; and means for displaying the drawable entity at the second client for the predetermined time.

Still further, the drawable entity may comprise at least one of a fading drawable entity, permanent drawable entity and point drawable entity. Additionally, the drawable entity comprises a time limit and the drawable entity automatically expire after an expiration of the time limit. The time limit may be understood to be permanent, resulting in the drawable entity to appear persistent for the duration of the communication session,

The accompanying drawings, which are incorporated in and constitute a part of this disclosure, illustrate exemplary embodiments and, together with the description, serve to explain the disclosed principles.

### Brief Description of the Drawings

Figure 1a depicts a high-level application of an embodiment of the present disclosure.
Figure 1b depicts a functional view of electronic devices for executing a embodiment of the present disclosure.
Figure 2a depicts a high-level overview of user interaction according to an embodiment of the present invention.
Figure 2b depicts an overview of user interaction according to an embodiment of the present invention.
Figure 2c depicts a functional view of user interaction according to an embodiment of the present invention.
Figure 3a depicts a high-level flowchart of a method according to an embodiment of the present invention.
Figure 3b depicts a high-level overview of a rendering loop according to an embodiment of the present invention.
Figure 3c depicts a detailed portion of a method according to an embodiment of the present invention.
Figure 3d depicts another detailed portion of a method according to an embodiment of the present invention.
Figure 4a depicts a still further detailed portion of a method according to an embodiment of the present invention.
Figure 4b depicts an even further detailed portion of a method according to an embodiment of the present invention.
Figure 4c depicts still another detailed portion of a method according to an embodiment of the present invention.

### Detailed Description of the Drawings

The technology herein is based upon the concept of effectively enabling enhanced communication among a multitude of users by enabling each user to augment theirs' and others' screens for a limited amount of time. The augmentation may essentially be limited only by the user's imagination and ability to create a gesture which can be stored as a drawable entity. A time limit may be associated with the drawable entity in order to affect its fading and ultimate disappearance from the screen. The time limit may vary as well as be conditioned upon the message or meaning or type of drawable entity being communicated. Still further, the condition itself may be situational and varied according to how long it would take to effectively communicate the message, meaning, type, etc. By way of example, short quick time limits may be imposed on drawable entities to attribute to simple and easily understood annotations where, oppositely, longer time limits may be imposed on drawable entities to convey more complex annotations. Alternatively, other conditions may be placed upon the time limits, including preventing large numbers of simultaneous users from cluttering up limited screen space with non-persistent copies of drawable entities. Other such limitations may be envisioned by one skilled in the art.

As used herein a drawable entity may be a visual element of any shape and size envisioned by the skilled person. The gesture may be indicated and/or created on an electronic device through input from a user, the input comprising any input means envisioned by the skilled person including touch, sound, motion, electronic and the like. By way of example, where the user intends on making a drawable entity persistent, such as a persistent line, a particular gesture may be used comprising a pan or drag followed by release followed by a tap at the end point. As used herein, the electronic device may include a processor, arranged to execute instructions stored into a memory, a communication module for effecting remote communication, a user interface for receiving and decoding user inputs and a display for displaying images and other information to the user as well as receive touch inputs for the user interface. Further, the electronic device may be mobile, including laptop computers, mobile telephones, tablets and the like as envisioned by the skilled person and shall hereinafter be referred to a mobile device.

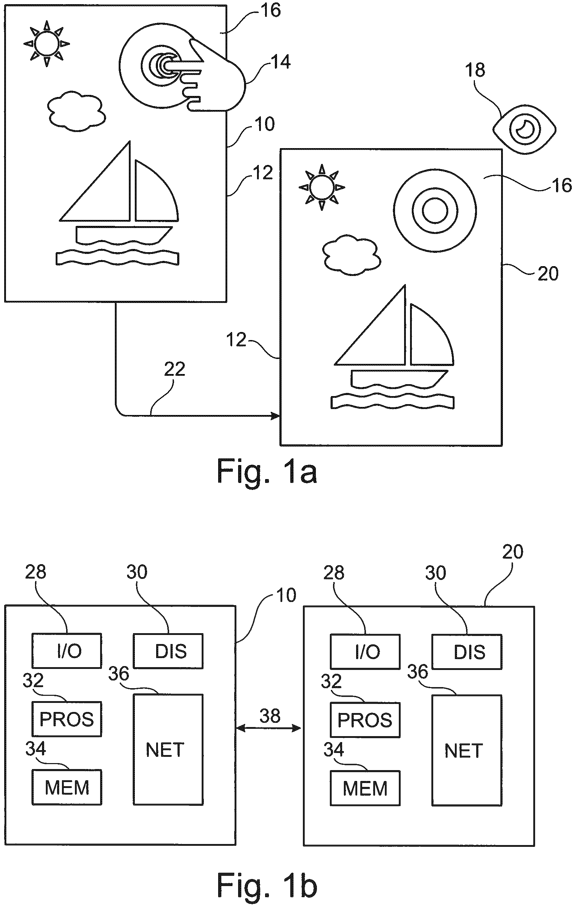

Figure 1a depicts a high-level application of an embodiment of the present disclosure. As shown, a first and second display screen 10, 20 of a first and second mobile device include substantially similar background images 12. A first user touches 14 the first display screen 10. This act is interpreted by the first mobile device as an indication of the first user's intent to create an annotation, expressed by a gesture and resulting in a drawable entity 16 on the first device screen 10, the drawable entity here comprising a series of concentric circles. Accordingly, the drawable entity 16 is made on the background image 12 shown on the first display device and communicated 22 to the second mobile device where it is depicted on the background image shown on the second display screen 20 thereby becoming visible to a second user 18. While each mobile device may run its own resident software, a web-based client application is also available to the user via his/her respective electronic device.

The drawable entity may be a persistent entity, namely one that remains on a screen for an extended period of time or a fading entity, namely, one that fades from view after a select period of time or an animation set to run for a select period of time.

Figure 1b depicts a functional view of the first and second mobile devices (10, 20) depicted in Figure 1a. Each of the first and second mobile devices may be configured to run a client thereon. As shown, each mobile device includes an input/output module 28 arranged to exchange information with a user, a display 30 arranged to depict information to a user, and a processor 32 arranged to execute instructions stored in memory 34. A communication module or network module 36 may also be included to facilitate communication 38 with other mobile devices. For purposes clarity, each user will be referred to herein below as the client with the understanding that similar arrangements for effecting and implementing embodiments of the present disclosure are encompassed herein.

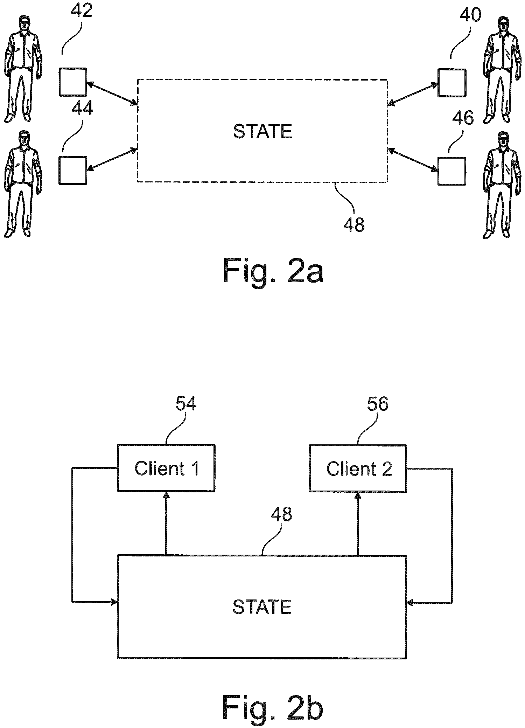

The functionality of an embodiment of the present description will now be described. Figure 2a depicts a high-level overview of user interaction according to an embodiment of the present invention. As will be shown, while certain information may be communicated via a live video feed and/or messaging and the like among the clients, a common function with respect to the respective states of the clients takes place. Returning to Figure 2a, as depicted a plurality of clients (40,42,44,46) using an infrastructure which facilitates a shared networked state 48.

As used herein, the state is to be understood as a collection of relevant data, which may include technical parameters necessary for the process to take place as well as drawable entities necessary to convey the annotations, which may be stored in each client's local memory. The shared state is the subset of the client state kept in sync between two clients using control logic of the client and communication via a network infrastructure.

Figure 2b depicts a general data flow between client and state. For simplicity, only two clients are depicted, though it should be understood to the skilled person that the embodiments of the present description are not limited by the actual number of clients. As depicted the two clients 54, 56 are in communication with the state 48 in that the dataflow is such that each client may update and receive updates from the state.

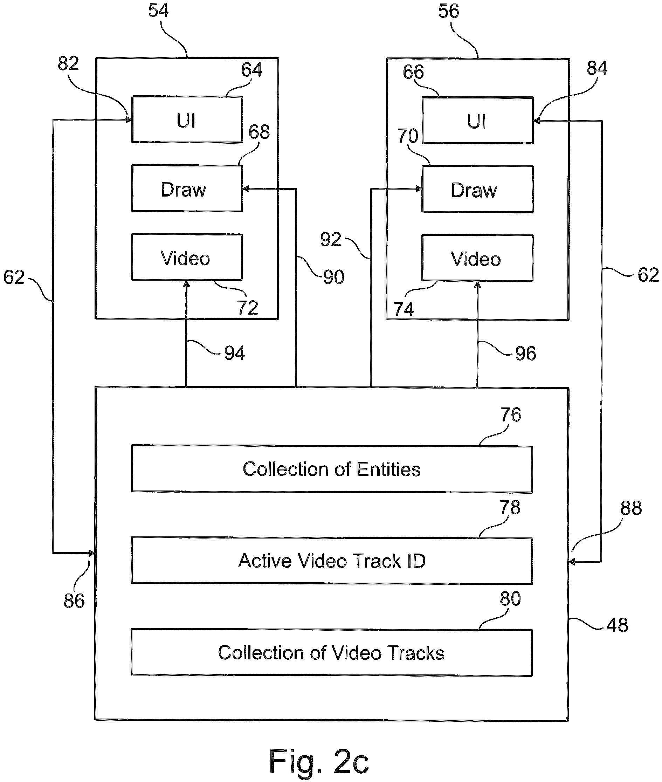

Figure 2c depicts a dataflow over live video feeds and function blocks of the clients and state of Figure 2b. The live video feeds each comprise an audio channel, a video channel and a data track. As shown, each of the two clients (54, 56) includes a user interface (64, 66), a draw layer (68, 70) and video layer (72, 74). The user interface may be a transparent user interface layer. As used herein, a user interface facilitates exchange of information between client and user; a draw layer is the transparent layer upon which entities may be drawn, the draw layer residing on top of the video layer which displays video to the user. The state 48 includes a collection of entities 76, an active video track ID 78 and collection of video tracks 80. As used herein, a collection of entities refers to a repository of entities stored and otherwise available to a respective client; an active video track ID refers to the video track being currently displayed to all clients and a collection of video tracks refers to a repository of video tracks stored and otherwise available to a respective client.

The shared state 48 defines the UI commands available 82, 84 and the UI issues commands 86, 88 to update the shared state 48 via a data track, the underlying technical means of communication between two clients and depicted as lined arrows in the figures. The shared state 48 further defines the drawable entities (90, 92) available to and usable by the draw layer 68, 70 and the video feed available (94, 96) for display on the video layer 72, 74. The video feed is transmitted via the video channel - the underlying technical means of transferring a video signal. The shared state also defines a collection of audio tracks available that reference audio channels - the underlying technical means of transferring audio signals. Alternatively, the state may define an active image in place of the video feed (not shown). The definition of UI commands, drawable entities and available video feeds are made by means known to one skilled in the art and are accordingly not limited to any one specific method or configuration so long as it is can be made compatible with the embodiments of the present invention.

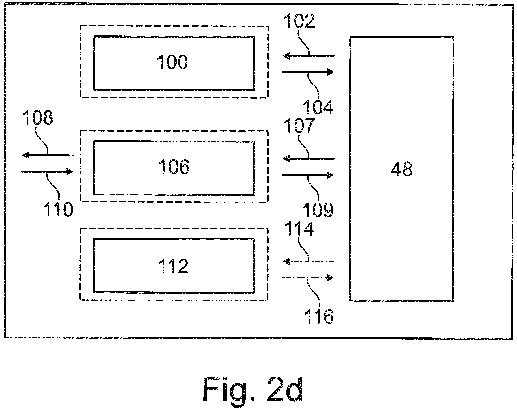

As depicted in figure 2d, a client comprises different processes which may be running simultaneously and use the data in the state or modify the data as required. The input detection process 100 receives 102 definitions of gestures from the state 48 in order to detect the gesture and create a drawable entity type linked to those definitions. The input detection process modifies the state by adding 104 drawable entities that have been created as a result of user interaction (gestures). The network IO (Input-output) 106 facilitates the synchronization of states between clients by sending 108 messages containing parameters of added drawable entities 107 and receiving 110 messages containing parameters for drawable entities via the data track and updating the state accordingly 109. The rendering loop 112 gets 114 information about drawable entities to be displayed from the state 48 and cleans the state from any expired entities 116. The following details the aforementioned briefly described functionality.

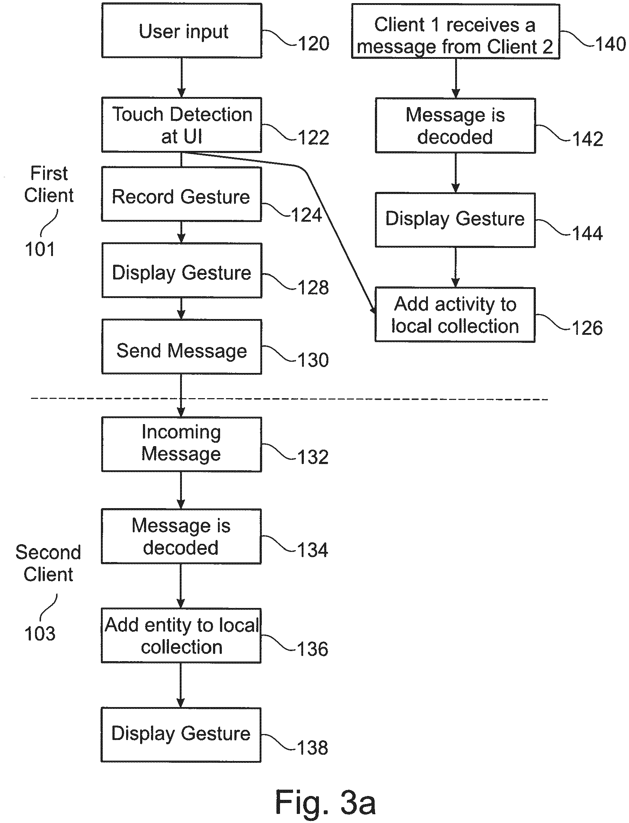

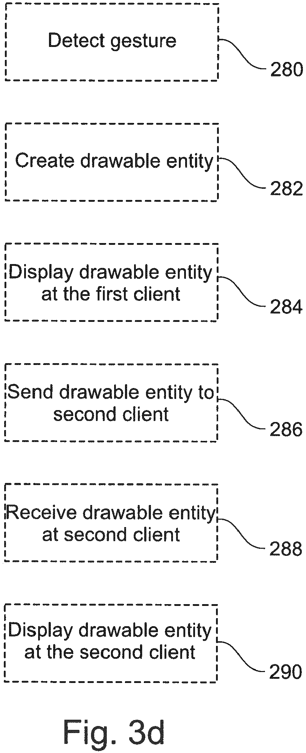

Figure 3a depicts a high-level flowchart of a method according to an embodiment of the present invention. The following may be implemented over a web-based application or a pre-installed application, the configurations of which may be programmed by one skilled in the art. As shown and starting with a first client 101, the user interface (not shown) is active and awaiting user input. By way of example, user input may be touch, audio, visual or in another format with the respective user interface appropriately arranged and configured to receive and decipher such user input. Hereinafter, for purposes of clarity, the user input will be referred to as a gesture. Accordingly, the user gestures the user interface 120 with the intent of annotating the video. The gesture is detected 122 and recorded at the UI 124, then added to a local collection of drawable entities 126. The local collection of drawable entities is represented by the common collection of entities in Figure 2c. The gesture is also displayed 128 at the first client 101. The gesture further generates and sends a message 130 to other clients (here second client 103) in communication with the first client 101. The message may comprise parameters for a drawable entity such as x, y coordinates and lifetime. At the second client 103, the message is received 132 and the parameters therein are read, stored into local memory 134 to cause the second client 103 to add the drawable entity to its local collection 136 and displayed locally 138. Stored drawable entities are available to their respective clients for future display. Another method of an embodiment of the present invention is depicted in figure 3d.

As shown in figure 3d, another embodiment of a method of communicating among a first and a second client over a feed is depicted. It is understood by the skilled person that the number of clients is not limited to a first and second but may include any number. The feed over which the first and second clients communicate may include a video channel and data track. Each client may include a video layer for displaying the video channel, a draw layer for displaying a drawable entity and a user interface layer for detecting an inputted gesture and storing it as a drawable entity. The method as depicted in figure 3d starts with reference to the first client wherein, in a first step, a gesture is detected on the first user interface layer 280. In a next step, a drawable entity is created from the gesture at the first client 282. In a next step, the drawable entity is displayed 284 at the first client and subsequentially sent 286. The step of sending may also precede the step of displaying. At the second client, the drawable entity is received 288 and then displayed 290 for a predetermined amount of time.

Returning to the first client, alternatively to the UI 120, a drawable entity for display may be received from another client, here by way of example and as depicted, the second client 103. In such an occurrence, the message is received 140, decoded 142, displayed locally 144 and added to the local collection 126. As the drawable entity was received by message from the second client, it becomes redundant and therefore unnecessary to send it to the second client by message.

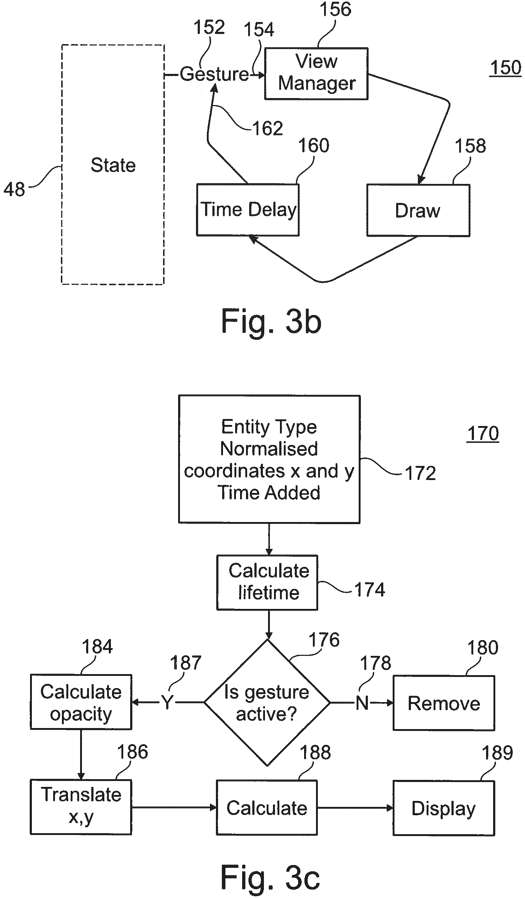

Figure 3b depicts a high-level overview of a rendering loop 150 according to an embodiment of the present invention. As shown, gestures 152 are requested 154 from the state 48 by a view manager 156. A draw manager, as used herein, refers to a subroutine of the software responsible for creating a visual effect on the transparent layer. The collection of drawable entities is iterated and each drawable entity is drawn 158 based upon necessity. As would be understood by the skilled person, each drawable entity contains a time of creation and, depending on the type, includes a lifetime. The necessity of the rendering is therefore defined by the current time and whether it is greater than the sum of the time of creation plus the lifetime. The rendering loop 150 waits for a preselect amount of time 160, before reverting back 162 to an initial step of receiving a requested gesture 152. The amount of time may be 5, 10, 15, 20, 25 or 30 seconds with other times included within the scope of an embodiment of the present disclosure.

Figure 3c depicts the drawing logic 170 for a single drawable entity. As shown, the drawable entity type is known as well as normalized x and y coordinates and creation time 172. Such information may be obtained and/or otherwise arrived at from either user input or incoming message from another client. The drawable entity lifetime is calculated 174 by subtracting the gesture creation time from the current time as measured by the client's internal clock. A determination is made whether the gesture is active 176. If the drawable entity lifetime has expired 178, the drawable entity is removed from the collection 180. If the drawable entity lifetime is not expired 182, namely, the drawable entity is still active, gesture opacity is calculated 184 as a function of its remaining lifetime. The normalized coordinates are translated to match screen space 186 and the resulting drawable entity's geometry is calculated as a function of lifetime and coordinates 188 and then displayed 189.

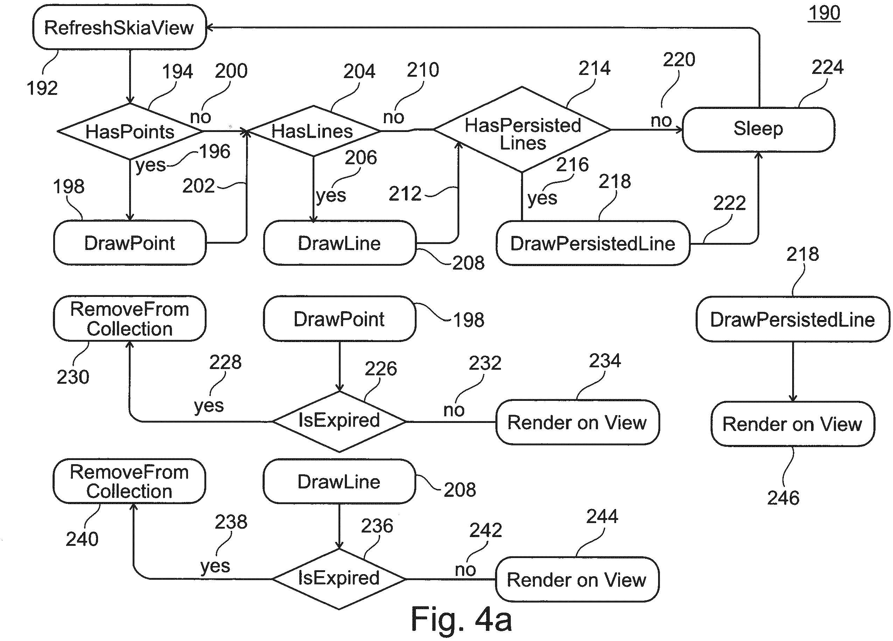

Figure 4a depicts the aforementioned rendering loop 190 of Figure 3b in greater detail. Starting at step 192, the draw layer is cleared, the process continues to step 194 wherein the view manager checks whether there are points in the state. If points are present (yes) 196, the points are drawn 198. If no points are present 200 or the drawing of points has finished 202, the view manager repeats the procedure with respect to lines, namely, whether lines are present in the state 204. As used herein, lines refer to a sequential collection of points, themselves small concentric circles. If lines are present or detected 206, then lines are drawn by the view manager onto the drawing layer 208. If not 210 or the line drawing is completed 212, then the same procedure is repeated for persisted lines. Namely, a determination is made whether persisted lines are detected in the state 214, and if so 216 then they are drawn onto the draw layer 218. If no persisted lines are detected 220 or the drawing is completed 222, then the process sleeps 224.

With respect to drawing points, the iteration for each point will contain a decision whether the point is expired 226. If yes 228, the point is removed from the collection 230. If it is determined that the point is not expired (no) 232, the point is rendered onto the draw layer 234. With respect to drawing lines 208, the iteration for each line will contain a decision whether the line is expired 236. If yes 238, the line is removed from the collection 240. If it is determined that the line has not expired 242, the line is rendered onto the draw layer 244. With respect to persisted lines 218, they are always drawn onto the draw layer and without concern or consideration of a lifetime 246.

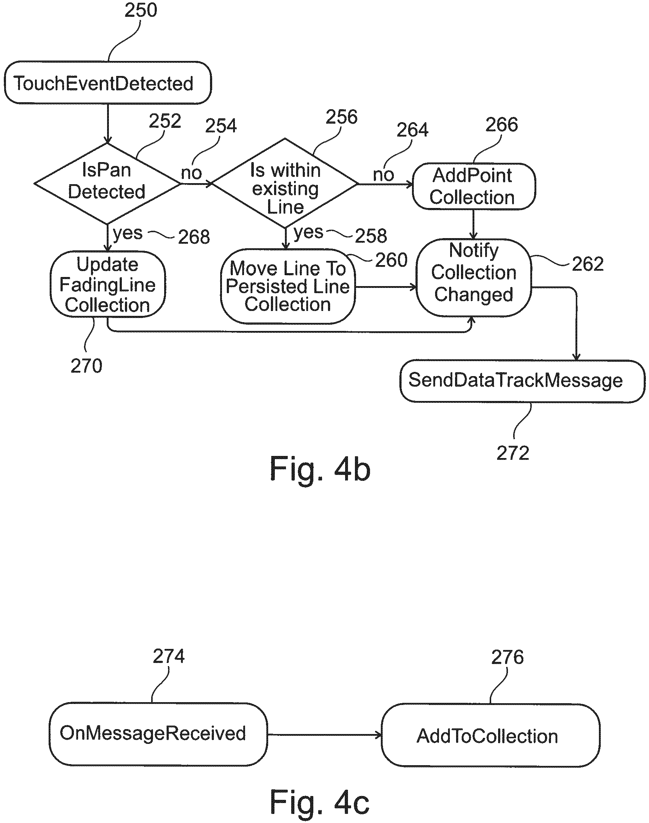

Figure 4b describes the logic executed during a touch detection event 250. As a first step 252, a decision is made whether the touch event is part of a pan event. As used herein, a pan event refers to a continuous touch dragging motion across the detection screen of a touch sensitive surface. The pan event can be touch activated such that it may arise from holding down the touch, dragging the held down touch across the surface and then releasing the touch. If no pan event is detected 254, it is checked whether the point is at an end of an existing fading line 256, and if yes 258, then the existing fading line is moved to the persisted line collection 260 and a notification is sent to notify an update of the shared state 262. If it is determined that the point is not at an end of an existing fading line 264, a point is added to the point collection 266 and the collection change is notified to the shared state 262. If a pan gesture is detected 268, then the current fading line collection is updated 270 and notified to the shared state 262. After every notification to the shared state, a data track message is sent 272 to the other participants of the session.

As depicted in Figure 4c, optionally, persisted lines may be subsequently deleted by a manual action, the manual action being user input such as user pressing the "undo" button 274 band deleting the last drawable entity 276.

The communication module of the present embodiments may comprise network and communication chips, namely, semiconductor integrated circuits that use a variety of technologies and support different types of serial and wireless technologies as envisioned by the skilled person. Example serial technologies supported by the communication module include RS232, RS422, RS485, serial peripheral interface, universal serial bus, and USB on-the-go, Ethernet via RJ-45 connectors or USB 2.0. Example wireless technologies include code division multiple access, wide band code division multiple access, wireless fidelity or IEEE 802.11, worldwide interoperability for microwave access or IEEE 802.16, wireless mesh, and ZigBee or IEEE 802.15.4. Bluetooth® chips may be used to provide wireless connectivity in solution-on-chip platforms that power short-range radio communication applications. The communication module may be configured to operate using 2G, 3G or 4G technology standards, including: universal mobile telecommunications systems, enhanced data rates for global evolution and global system for global communication. The 4G standard is based solely on packet switching, whereas 3G is based on a combination of circuit and packet switching.

The processor of the present embodiments may be disposed in communication with one or more memory devices, such as a RAM or a ROM, via a storage interface. The storage interface may connect to memory devices including, without limitation, memory drives, removable disc drives, etc., employing connection protocols such as serial advanced technology attachment, integrated drive electronics, IEEE-1394, universal serial bus, fiber channel, small computer systems interface, etc. The memory drives may further include a drum, magnetic disc drive, magneto-optical drive, optical drive, redundant array of independent discs, solid-state memory devices, solid-state drives, etc.

The memory devices may store a collection of program or database components, including, without limitation, an operating system, a user interface application, a user/application data (e.g., any data variables or data records discussed in this disclosure), etc. The operating system may facilitate resource management and operation of the computer system. Examples of the operating system include, without limitation, Apple Macintosh OS X, Unix, Unix-like system distributions, Linux distributions, IBM OS/2, Microsoft Windows, Apple iOS, Google Android, Blackberry OS, or the like. The user interface may facilitate display, execution, interaction, manipulation, or operation of program components through textual or graphical facilities, including but not limited to touch screens. For example, user interfaces may provide computer interaction interface elements on a display system operatively connected to the computer system, such as cursors, icons, check boxes, menus, scrollers, windows, widgets, etc. Graphical user interfaces (GUIs) may be employed, including, without limitation, Apple Macintosh operating systems' Aqua, IBM OS/2, Microsoft Windows (e.g., Aero, Metro, etc.), Unix X-Windows, web interface libraries (e.g., ActiveX, Java, Javascript, AJAX, HTML, Adobe Flash, etc.), or the like.

It will be appreciated that, for clarity purposes, the above description has described embodiments of the technology described herein with reference to different functional units and processors. However, it will be apparent that any suitable distribution of functionality between different functional units, processors or domains may be used without detracting from the technology described herein. For example, functionality illustrated to be performed by separate processors or controllers may be performed by the same processor or controller. Hence, references to specific functional units are only to be seen as references to suitable means for providing the described functionality, rather than indicative of a strict logical or physical structure or organization.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A computer-implemented process for communicating among a plurality of clients subscribing to common live feeds, each of the feeds comprising video channel and data track, and each of the clients comprising a video layer for displaying the video channel, a draw layer for displaying a drawable entity and a user interface layer for detecting an inputted gesture and storing it as a drawable entity, the process comprising:
• detecting the inputted gesture on the user interface layer;
• storing the gesture as a drawable entity;
• displaying the drawable entity on the draw layer for a predetermined time;
• transmitting the drawable entity through the data track; and
• displaying the drawable entity on the draw layer of the at least one second client of the plurality of clients.

2. The process according to claim 1, wherein the drawable entity comprises at least one of a fading drawable entity, persistent drawable entity and point drawable entity.

3. The process according to claims 1 and 2, wherein the fading pointer drawable entity and the point drawable entity comprise a time limit and the drawable entity automatically expires after an expiration of the time limit.

4. The process according to claims 1-3, wherein the plurality of clients each comprise means for detecting gesture and storing and displaying the drawable entity.

5. A computer-implemented process for communicating among a first and a second client over a feed, the feed including a video channel and data track, and each of the clients comprising a video layer for displaying the video channel, a draw layer for displaying a drawable entity and a user interface layer for detecting an inputted gesture and storing it as a drawable entity, the process comprising:
• detecting a gesture on the first user interface layer at the first client;
• creating a drawable entity from the gesture at the first client;
• sending the drawable entity from the first client to the second client and storing the drawable entity at the first client;
• displaying the drawable entity at the first client for a predetermined time;
• receiving the drawable entity at the second client; and
• displaying the drawable entity at the second client for the predetermined time.

6. The process according to claim 5, wherein the step of creating further comprises the steps of determining the type and screen coordinates of the gesture.

7. The process according to claims 5-6, wherein the screen coordinates are normalized screen coordinates.

8. The process according to claims 5-7, wherein the step of storing the drawable entity further comprises the step of storing the entity type, entity lifetime and screen coordinates of the drawable entity.

9. The process according to claims 5-8, wherein the gesture type is single touch, a pan or a persistent line.

10. A system for communicating among a plurality of clients subscribing to common live feeds, each of the feeds comprising video channel and data track, and each of the clients comprising a video layer for displaying the video channel, a draw layer for displaying a drawable entity and a user interface layer for detecting an inputted gesture and storing it as a drawable entity, the process comprising:
• means for detecting the inputted gesture on the user interface layer;
• means for storing the gesture as a drawable entity;
• means for displaying the drawable entity on the draw layer for a predetermined time;
• means for transmitting the drawable entity through the data track; and
• means for displaying the drawable entity on the draw layer of the at least one second client of the plurality of clients.

11. The system according to claim 10, wherein the drawable entity comprises at least one of a fading drawable entity, persistent drawable entity and point drawable entity.

12. The system according to claims 10-11, wherein the fading pointer drawable entity and the point drawable entity comprise a time limit and the drawable entity automatically expires after an expiration of the time limit.

13. The system according to claims 10-12, wherein the plurality of clients each comprise means for detecting gesture and storing and displaying the drawable entity.

14. A system for communicating among a first and a second client over a feed, the feed including a video channel and data track, and each of the clients comprising a video layer for displaying the video channel, a draw layer for displaying a drawable entity and a user interface layer for detecting an inputted gesture and storing it as a drawable entity, the process comprising:
• means for detecting a gesture on the first user interface layer at the first client;
• means for creating a drawable entity from the gesture at the first client;
• means for sending the drawable entity from the first client to the second client and storing the drawable entity at the first client;
• means for displaying the drawable entity at the first client for a predetermined time;
• means for receiving the drawable entity at the second client;
• means for displaying the drawable entity at the second client for the predetermined time;
• wherein the step of creating further comprises the steps of determining the type and screen coordinates of the gesture;
• wherein the screen coordinates are normalized screen coordinates:
• wherein the step of storing the drawable entity further comprises the step of storing the entity type, entity lifetime and screen coordinates of the drawable entity; and
• wherein the gesture type is single touch, a pan or a persistent line.
